# EUROPEAN PATENT APPLICATION

(11) **EP 4 183 498 A1**
(43) Date of publication of application: **24.05.2023**
(21) Application number: 21866459.7
(22) Date of filing: 16.08.2021
(51) Int. Cl.: B21C 51/00, C21D 9/46, C21D 9/56, G06N 20/00

(54) **STEEL STRIP AND METHOD FOR PRODUCING SAME**

(30) Priority: 14.09.2020 JP 2020154165
(71) Applicant: JFE Steel Corporation, Tokyo 100-0011 (JP)
(72) Inventor: OJIMA, Mayumi, Tokyo 100-0011 (JP); FUNAKAWA, Yoshimasa, Tokyo 100-0011 (JP)
(74) Representative: Grünecker Patent- und Rechtsanwälte PartG mbB
(86) International application number: PCT/JP2021/029900
(87) International publication number: WO 2022/054499

(57) **Abstract**

Provided is a steel strip that can provide accurate material information and a method of producing the same. A steel strip (9) comprises a medium that provides material information including a material distribution associating each position in a two-dimensional direction of a rolling direction and a transverse direction with a material characteristic value. The material information is predicted using a prediction model to which input data including a line output factor in a production line for the steel strip, a disturbance factor, and a component value of the steel strip being produced is input. The prediction model includes: a machine learning model that receives the input data as input and outputs a production condition factor and that is generated by machine learning; and a metallurgical model that receives the production condition factor as input and outputs the material characteristic value.

## Description

### TECHNICAL FIELD

The present disclosure relates to a steel strip and a method of producing the same. The present disclosure particularly relates to a steel strip that can be widely used in fields such as transportation equipment including automobiles, construction machinery, and trains, medicine, food, and households.

### BACKGROUND

Steel strips to which surface defect information is added, called marked steel strips, are known. A marked steel strip has information indicating, for example, the positions of exfoliation and non-coating on the surface of the steel strip. This information can be used to enhance the efficiency in producing products (e.g. automobiles) using steel strips.

JP 2014-076480 A (PTL 1) discloses a technique of measuring surface defects in a steel strip with a defect measuring instrument installed on a production line and adding a defect information recording portion using a bar code or a two-dimensional code to the steel strip to thus notify a user of abnormal parts such as defects beforehand. As a result of the user recognizing the abnormal parts, problems during press forming can be prevented to improve the yield rate.

JP 2006-218505 A (PTL 2) discloses a technique of checking production conditions, applications, required specification information, and surface characteristics measurement results, predicting sites where surface defects are not apparent but are likely to become apparent later, and marking the steel strip accordingly.

### CITATION LIST

### Patent Literature

PTL 1: JP 2014-076480 A
PTL 2: JP 2006-218505 A
PTL 3: JP 6086155 B2

### SUMMARY

### (Technical Problem)

Steel strips are widely used in fields such as transportation equipment including automobiles, construction machinery, and trains, medicine, food, and households. For example, steel materials used in various parts of automotive bodies, such as framework parts, outer panel parts, and suspension parts of automobiles, are increasingly strengthened in order to reduce the total weight of the automotive body, and the production of materials that, even when reduced in thickness, can provide the required strength and crashworthiness of automobiles is promoted. Moreover, automotive body structures are diversifying in response to social needs for functionality and design, and various performances including not only strength but also balance between strength and formability, weldability, chemical convertibility, and rust resistance are required. This makes the steel production process more complex.

If the steel production process is complex, for example, the tensile strength may vary in the rolling (longitudinal) direction and the transverse (lateral, width) direction throughout the steel strip due to nonuniformity in the composition of the steel slab during the casting process or variations in the heating temperature, heating rate, cooling temperature, and cooling rate in the steel sheet during the annealing process. In particular, when the strength of the steel sheet is higher, the dependence of the material characteristic values on the production conditions is greater. It is therefore difficult to completely homogenize the material distribution of the steel strip.

For press manufacturers that form parts using steel strips, unexpected nonuniformity in the material of the steel strip causes a decrease in the yield rate of parts. To appropriately select steel strip collection positions and collection directions and prevent problems such as cracks and shape defects during forming, end users such as press manufacturers demand the provision of accurate steel strip material distributions. The techniques described in PTL 1 and PTL 2 provide defect information but do not provide accurate steel strip material distributions.

Regarding the tensile strength which is one of the material characteristic values, conventionally the values of a material test conducted on the lead end and the tail end of a steel strip are added to the steel strip as representative values before shipping the steel strip. It is, however, difficult to accurately estimate the material distribution from only the values at the lead end and the tail end.

For example, JP 6086155 B2 (PTL 3) discloses the following method: Information associating an actual value of measuring the temperature distribution of an entire steel strip with a material characteristic value at each measurement position is made into a database. The database is then searched for data similar to the production result value of subsequently produced steel, to estimate the material characteristic value of the steel strip. However, the technique described in PTL 3 requires a large amount of learning data in order to create an accurate prediction model, and accordingly cannot be used in the case where there are few or no past production results. There is thus a need for a system that accurately predicts one or more material characteristic values using a prediction model different from these conventional techniques.

It could therefore be helpful to provide a steel strip that can provide accurate material information and a method of producing the same.

### (Solution to Problem)

A steel strip according to an embodiment of the present disclosure comprises a medium that provides material information including a material distribution associating each position in a two-dimensional direction of a rolling direction and a transverse direction with a material characteristic value.

A method of producing a steel strip according to an embodiment of the present disclosure comprises: predicting material information including a material distribution associating each position in a two-dimensional direction of a rolling direction and a transverse direction with a material characteristic value, using a prediction model to which input data including a line output factor in a production line for the steel strip, a disturbance factor, and a component value of the steel strip being produced is input; and including a medium that provides the material information, in the steel strip, wherein the prediction model includes: a machine learning model that receives the input data as input and outputs a production condition factor and that is generated by machine learning; and a metallurgical model that receives the production condition factor as input and outputs the material characteristic value.

### (Advantageous Effect)

It is thus possible to provide a steel strip that can provide accurate material information and a method of producing the same.

By producing and shipping such steel strips, it is possible to reduce the defect rate and prevent delays in the production process on the part of end users such as press manufacturers.

### BRIEF DESCRIPTION OF THE DRAWINGS

In the accompanying drawings:
FIG. 1 is a diagram illustrating an example of the structure of a material characteristic value prediction system;
FIG. 2 is a diagram for explaining another example of the structure of a material characteristic value prediction system;
FIG. 3 is a block diagram of an information processing device;
FIG. 4 is a diagram illustrating the flow of prediction of a material characteristic value using a prediction model;
FIG. 5 is a diagram illustrating the flow of prediction of the tensile strength of a hot-rolled steel sheet using a prediction model; and
FIG. 6 is a flowchart illustrating processes relating to material characteristic value prediction performed in steel strip production.

### DETAILED DESCRIPTION

### (Structure of material characteristic value prediction system)

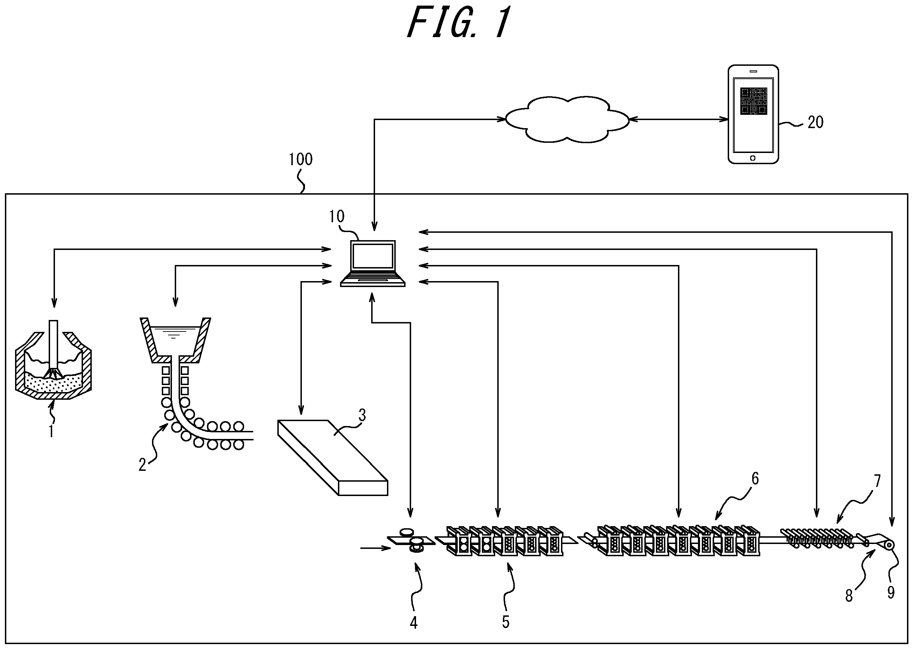

FIG. 1 is a schematic diagram illustrating the overall structure of a material characteristic value prediction system 100 including an information processing device 10 used in production of a steel strip 9 according to an embodiment of the present disclosure. The material characteristic value prediction system 100 includes the information processing device 10 used in the production of the steel strip 9. The information processing device 10 may be a process computer that controls operation. In the example in FIG. 1, the steel strip 9 obtained by coiling a steel sheet is the product. The product is, however, not limited to the steel strip 9. For example, the product may be a flat sheet of metal which is a steel material. The product is not limited to a steel material, and may be, for example, made of a material such as an aluminum alloy, copper, titanium, or magnesium.

The material characteristic value prediction system 100 is, for example, a system owned by a material manufacturer (a steel manufacturer in this example) that receives orders from a product manufacturer (for example, an automobile manufacturer). One of the points looked at in developing the presently disclosed techniques is that part information is concentrated in product manufacturers that use parts and material information is concentrated in material manufacturers that design and produce materials for parts. Hence, one of the features according to the present disclosure is that material information possessed by material manufacturers is used by product manufacturers to achieve efficient production of parts. By using the material information, the product manufacturers can prevent problems such as cracks and shape defects during forming and produce parts with high efficiency. Herein, the material information includes the material distribution of the steel strip 9 in the two-dimensional direction of the rolling direction and the transverse direction. The material distribution is information associating each position in the two-dimensional direction with the below-described material characteristic value.

As illustrated in FIG. 1, the material characteristic value prediction system 100 includes a converter 1, a continuous casting machine 2, a heating furnace 3, a scale breaker 4, a rougher 5, a finisher 6, a cooling device 7, a coiler 8, the steel strip 9, and the information processing device 10.

In the production process, first, iron ore as a raw material is charged into a blast furnace together with limestone and coke, to produce molten pig iron. The pig iron tapped from the blast furnace is subjected to quality governing for carbon, etc. in the converter 1, and further subjected to final quality governing by secondary refining. The refined steel is cast in the continuous casting machine 2 to produce cast steel (slab) which is an intermediate material. The slab is then heated in a heating process by the heating furnace 3, and subjected to a hot rolling process by the rougher 5 and the finisher 6, a cooling process by the cooling device 7, and coiling by the coiler 8 to produce the steel strip 9. The production process may optionally include, after the cooling process, treatment processes such as a pickling process, a cold rolling process, an annealing process, a skin pass process, and an inspection process.

The material characteristic value prediction system 100 is capable of acquiring, from the steel strip 9, the material information including the material distribution of the steel strip 9 in the two-dimensional direction of the rolling direction and the transverse direction. For example, the material characteristic value prediction system 100 marks the steel strip 9 with a two-dimensional code. The product manufacturer reads the two-dimensional code by a mobile communication terminal 20 and accesses the information processing device 10 in the material characteristic value prediction system 100 to obtain the material distribution, etc. of the steel strip 9 accompanied by the two-dimensional code.

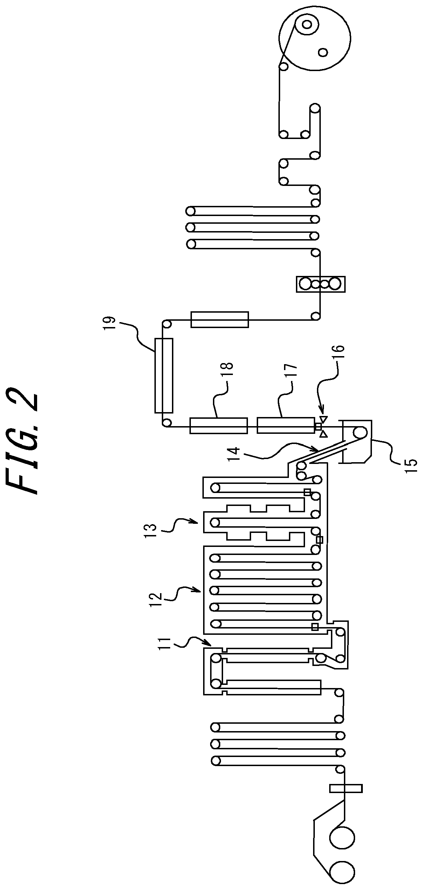

The material characteristic value prediction system 100 may include a different production line for the steel strip 9 from that illustrated in FIG. 1. For example, the material characteristic value prediction system 100 may include a continuous annealing line (hereafter referred to as "hot-dip galvanizing line") for producing a hot-dip galvanized steel strip, as illustrated in FIG. 2.

The hot-dip galvanizing line includes a heating zone 11, a soaking zone 12, and a cooling zone 13, as an annealing section. The annealing process in the hot-dip galvanizing line is a heat treatment process performed in the annealing section, and involves heating the steel sheet from around room temperature, holding the steel sheet at a predetermined temperature, and then decreasing the temperature of the steel sheet to such a temperature suitable for galvanizing.

The hot-dip galvanizing line includes a coating section downstream of the annealing section. The hot-dip galvanizing line includes a snout 14, a galvanizing tank 15, and a wiping device 16, as the coating section. The coating process in the hot-dip galvanizing line is a process of forming an appropriate amount of coating on the steel sheet in the coating section.

The hot-dip galvanizing line includes a reheating section downstream of the coating section. The hot-dip galvanizing line includes an alloying zone 17, a holding zone 18, and a final cooling zone 19, as the reheating section. The reheating process in the hot-dip galvanizing line is a heat treatment process performed in the reheating section.

The heating zone 11 is a line for heating the steel sheet, and performs heating to a preset temperature in a range of about 650 °C to 950 °C depending on the steel type. The soaking zone 12 is a line for holding the steel sheet at the predetermined temperature. The cooling zone 13 is a line for cooling the steel sheet to a temperature suitable for galvanizing, e.g. about 450 °C.

The snout 14 is supplied with a mixed gas containing hydrogen, nitrogen, and water vapor, and adjusts the atmospheric gas until the steel sheet is immersed in the galvanizing tank 15. The galvanizing tank 15 includes a sink roll, and immerses downward the steel sheet that has passed through the snout 14 and pulls upward the steel sheet having molten zinc adhered to the surface from the coating bath. The wiping device 16 sprays wiping gas from nozzles arranged on both sides of the steel sheet to scrape off excess molten zinc adhering to the surface of the steel sheet, thereby adjusting the molten zinc coating weight (coating amount).

The alloying zone 17 heats the steel sheet that has passed through the wiping device 16, to a temperature (typically, about 500 °C) at which a Zn-Fe alloying reaction progresses. The holding zone 18 maintains the temperature of the steel sheet to secure the time required for the progress of the alloying reaction. The final cooling zone 19 finally cools the steel sheet that has undergone the alloying treatment, to about room temperature.

Thus, the material characteristic value prediction system 100 may include the production line for the steel strip 9 involving, for example, the hot rolling process, the cold rolling process, and the annealing process. The material characteristic value prediction system 100 may include the production line for the steel strip 9 involving, for example, the annealing process, the coating process, and the reheating process.

### (Structure of information processing device)

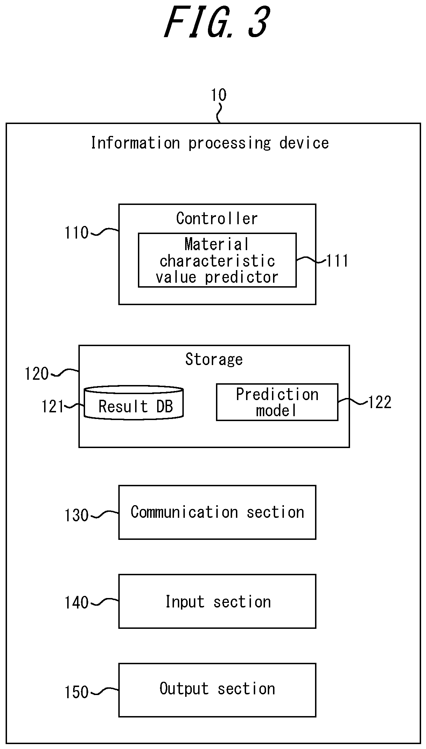

FIG. 3 is a block diagram of the information processing device 10. The information processing device 10 includes a controller 110, a storage 120, a communication section 130, an input section 140, and an output section 150. The information processing device 10 calculates necessary production conditions based on the desired material characteristic value of the product, and sets at least one production condition factor for each production device. The material characteristic value is a value indicating the physical characteristics of the product such as the strength and the resistance to external forces. An example of the material characteristic value is tensile strength. The production condition factor is a parameter (production parameter) adjustable in the process of producing the product. An example of the production condition factor is the rolling ratio.

In this embodiment, the information processing device 10 uses a prediction model 122 that includes a machine learning model generated by machine learning and a metallurgical model. The information processing device 10 functions as a material characteristic value prediction device that predicts at least one material characteristic value using the prediction model 122. The details of the prediction model 122 and the flow of prediction of the material characteristic value will be described later. In this embodiment, the information processing device 10 is capable of acquiring the material information including the material distribution from the steel strip 9.

The controller 110 includes at least one processor, at least one dedicated circuit, or a combination thereof. Examples of the processor include a general-purpose processor such as a central processing unit (CPU), and a dedicated processor specialized in a specific process. Examples of the dedicated circuit include a field-programmable gate array (FPGA) and an application specific integrated circuit (ASIC). The controller 110 executes processes relating to the operation of the information processing device 10 while controlling each component in the information processing device 10.

In this embodiment, the controller 110 includes a material characteristic value predictor 111. The material characteristic value predictor 111 acquires input data including at least one line output factor in the production line for the steel strip 9, at least one disturbance factor, and at least one component value of the steel strip 9 being produced, and, using the prediction model 122 to which the input data is input, predicts at least one material characteristic value of the steel strip 9 produced.

The storage 120 includes at least one semiconductor memory, at least one magnetic memory, at least one optical memory, or a combination of two or more thereof. Examples of the semiconductor memory include a random access memory (RAM) and a read only memory (ROM). The RAM is, for example, a static random access memory (SRAM) or a dynamic random access memory (DRAM). The ROM is, for example, an electrically erasable programmable read only memory (EEPROM). For example, the storage 120 functions as a main storage device, an auxiliary storage device, or a cache memory. The storage 120 stores data used for the operation of the information processing device 10 and data obtained as a result of the operation of the information processing device 10. For example, the storage 120 stores a result database 121 and the prediction model 122. The result database 121 stores various measurements and settings relating to the production line and the operation using the production line. The measurements and settings stored in the result database 121 include those used as learning data when the information processing device 10 generates the prediction model 122.

The communication section 130 includes at least one communication interface. Examples of the communication interface include a LAN interface, a WAN interface, an interface that complies with a mobile communication standard such as Long Term Evolution (LTE), 4G (4th generation), or 5G (5th generation), and an interface that complies with short-range wireless communication such as Bluetooth^{®} (Bluetooth is a registered trademark in Japan, other countries, or both). The communication section 130 receives data used for the operation of the information processing device 10, and transmits data obtained as a result of the operation of the information processing device 10.

The input section 140 includes at least one input interface. Examples of the input interface include a physical key, a capacitive key, a pointing device, a touch screen integrated with a display, and a microphone. The input section 140 receives an operation of inputting data used for the operation of the information processing device 10. The input section 140 may be connected to the information processing device 10 as an external input device, instead of being included in the information processing device 10. As a connection method, any method such as Universal Serial Bus (USB), High-Definition Multimedia Interface (HDMI^{®} (HDMI is a registered trademark in Japan, other countries, or both)), or Bluetooth^{®} may be used.

The output section 150 includes at least one output interface. Examples of the output interface include a display and a speaker. The display is, for example, a liquid crystal display (LCD) or an organic electroluminescent (EL) display. The output section 150 outputs data obtained as a result of the operation of the information processing device 10. The output section 150 may be connected to the information processing device 10 as an external output device, instead of being included in the information processing device 10. As a connection method, any method such as USB, HDMI^{®}, or Bluetooth^{®} may be used.

The functions of the information processing device 10 are implemented by a processor that corresponds to the controller 110 executing a program of information processing performed in this embodiment. That is, the functions of the information processing device 10 are implemented by software. The program causes a computer to execute the operation of the information processing device 10, thus causing the computer to function as the information processing device 10.

All or part of the functions of the information processing device 10 may be implemented by a dedicated circuit corresponding to the controller 110. That is, all or part of the functions of the information processing device 10 may be implemented by hardware.

### (Prediction model)

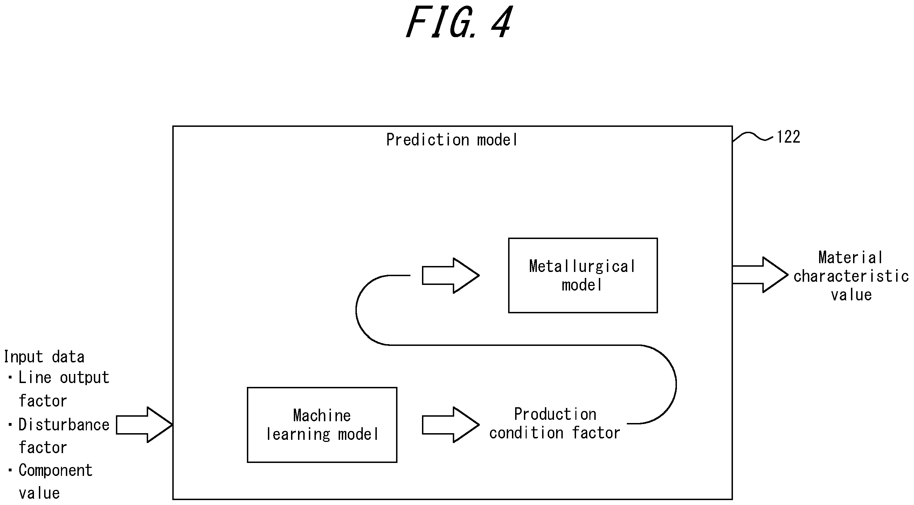

FIG. 4 is a diagram illustrating the flow of prediction of a material characteristic value using the prediction model 122. Upon careful examination for the prediction model 122, we found out that the use of a hybrid parameter of metallurgy and operation result, which is obtained by converting a metallurgical parameter into an actual operation parameter, can improve the material characteristic value prediction accuracy.

The prediction model 122 used by the information processing device 10 to predict the material characteristic value includes the machine learning model and the metallurgical model. In this embodiment, the machine learning model receives, as input, input data including at least one line output factor, at least one disturbance factor, and at least one component value of the steel strip 9 being produced, and outputs at least one production condition factor. The production condition factor is a parameter adjustable in the process of producing the product, as mentioned above. Specific examples of the production condition factor will be described later. The machine learning model can accurately indicate the relationship among the actual operation parameter relating to the operation of the production line for producing the steel strip 9, the operation result parameter, and the production condition factor.

In this embodiment, the metallurgical model receives the production condition factor as input and outputs at least one material characteristic value. Examples of the material characteristic value include tensile strength, yield stress, elongation, hole expansion ratio, bendability, r value, hardness, fatigue resistance, impact value, delayed fracture value, wear value, chemical convertibility, high-temperature property, low-temperature toughness, corrosion resistance, magnetic property, and surface characteristics. The metallurgical model is a prediction formula based on the physicochemical phenomenon of metal. The metallurgical model may be made up of a plurality of models. For example, the metallurgical model may include a first metallurgical model that receives the production condition factor as input and outputs at least one metallurgical phenomenon factor, and a second metallurgical model that receives the metallurgical phenomenon factor as input and outputs the material characteristic value. Examples of the metallurgical phenomenon factor include volume fraction, surface characteristics, precipitate dimension, precipitate density, precipitate shape, precipitate dispersion state, recrystallization ratio, phase fraction, crystal grain shape, texture, residual stress, dislocation density, and crystal grain size. In the case where the metallurgical phenomenon can be actually measured, the metallurgical phenomenon factor measurement value may be used. Examples of the method of measuring the metallurgical phenomenon include an in-line X-ray measuring instrument, an ultrasonic flaw detector, and a magnetic measuring instrument.

The metallurgical model indicates the metallurgical phenomenon with high accuracy, based on a theoretical formula for the physicochemical phenomenon. The metallurgical model may further reflect an empirical rule based on the operation results of the production device. The metallurgical model can accurately indicate the relationship among the metallurgical parameter, the production condition factor, and the material characteristic value.

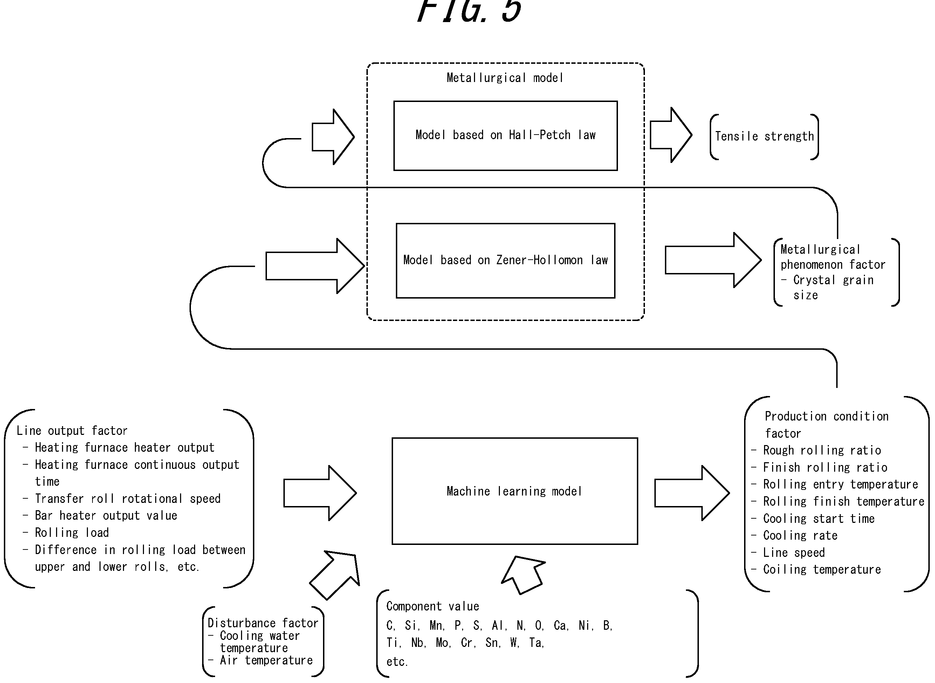

FIG. 5 is a diagram illustrating the flow of prediction of the tensile strength of a hot-rolled steel sheet using the prediction model 122. For example, the tensile strength prediction illustrated in FIG. 5 is performed during a process in which a slab produced in a steelmaking process is treated in a hot rolling process, a cold rolling process, and an annealing process to finally produce the steel strip 9.

After the steelmaking process, the information processing device 10 in the material characteristic value prediction system 100 acquires input data including at least one line output factor, at least one disturbance factor, and at least one component value of the hot-rolled steel sheet in the hot rolling process. Examples of the line output factor include heating furnace heater output, heating furnace continuous output time, transfer roll rotational speed, bar heater output value, rolling load, difference in rolling load between upper and lower rolls, spray pressure between stands, run-out table cooling water volume, and run-out table cooling water pressure in the hot rolling process. Examples of the disturbance factor include cooling water temperature and air temperature in the hot rolling process. Examples of the component value include the measured values of C, Si, Mn, P, S, Al, N, O, Ca, Ni, B, Ti, Nb, Mo, Cr, Sn, W, and Ta of the hot-rolled steel sheet. As the disturbance factor, for example, the cooling water temperature and the air temperature in the hot rolling process and the expected air temperature when passing each process may be used. As the component value, for example, the value in the steelmaking process may be used.

The information processing device 10 inputs the input data to the machine learning model and obtains at least one production condition factor. In the example in FIG. 5, the machine learning model outputs at least one production condition factor that can be set in the hot rolling process. Examples of the production condition factor include rough rolling ratio, finish rolling ratio, rolling entry temperature, rolling finish temperature, cooling start time, cooling rate, line speed, and coiling temperature in the hot rolling process.

The information processing device 10 inputs the production condition factor to the metallurgical model and obtains the tensile strength of the steel sheet which is a prediction value. In the example in FIG. 5, the metallurgical model includes the first metallurgical model that receives the production condition factor as input and outputs at least one metallurgical phenomenon factor, and the second metallurgical model that receives the metallurgical phenomenon factor as input and outputs at least one material characteristic value. The first metallurgical model is, for example, a model based on the Zener-Hollomon law. The second metallurgical model is, for example, a model based on the Hall-Petch law.

The Zener-Hollomon law is an empirical rule for estimating recrystallization of metallic microstructure when metal is worked at high temperature. In the present disclosure, the metallurgical phenomenon factor such as crystal grain size is output by an improved model that is based on the Zener-Hollomon law and uses a production result value as input.

The Hall-Petch law is an empirical rule for estimating material strength from the crystal grain size of metallic microstructure. In the present disclosure, the tensile strength is output based on the crystal grain size of the metallic microstructure by an improved model that is based on the Hall-Petch law and uses a production result value as input.

The prediction model 122 including the machine learning model and the metallurgical model is generated depending on the process in the production line for the steel strip 9. FIG. 5 illustrates an example of the prediction model 122 in the hot rolling process. For example, in the case of performing prediction in the cold rolling process, a prediction model 122 different from that in the hot rolling process is prepared.

In the case of the prediction model 122 in the cold rolling process, examples of at least one line output factor input to the machine learning model include rolling load, difference in rolling load between upper and lower rolls, roll diameter, roll rotational speed, and lubrication condition in the cold rolling process. Examples of at least one production condition factor output from the machine learning model include rolling ratio, cold rolling ratio, and frictional coefficient in the cold rolling process.

### (Generation of machine learning model)

Before preforming the prediction, the information processing device 10 acquires learning data from the result database 121 and generates the machine learning model using the learning data. The learning data is selected depending on the process in the production method for the steel strip 9 in which the machine learning model is used. For example, as learning data for generating the machine learning model used in the cold rolling process, learning data including rolling load, difference in rolling load between upper and lower rolls, roll diameter, roll rotational speed, and lubrication condition as input and rolling ratio, cold rolling ratio, and frictional coefficient as output may be selected.

The input in every set of learning data includes at least one disturbance factor. Thus, a machine learning model that takes into account the disturbances affecting the material characteristic value of the product is obtained. Moreover, the input in every set of learning data includes at least one component value. A non-limiting example of the method of generating the machine learning model using such learning data is a neural network. Alternatively, the machine learning model may be generated by a method such as decision trees or random forests.

### (Material distribution)

In this embodiment, the result database 121 includes the temperature hysteresis of the steel strip 9 in the transverse direction and the rolling direction in past production processes. The temperature of the steel strip 9 in the transverse direction and the rolling direction may be measured, for example, by a thermographic device, a radiation thermometer, or the like. The thermographic device may be installed, for example, at least at the 1/4 position, the center position, and the 3/4 position in the transverse direction of the steel strip 9. The steel sheet runs in one direction. Accordingly, the positional relationship between the actual temperature measurement position and the steel strip 9 is determined based on the sheet passing speed during the measurement. In the case where it is impossible to measure the temperature of the entire coil, the overall temperature may be predicted using a commonly used thermal conductivity model.

By the prediction model obtained from the relationship between the values of the material test conducted at the lead end and the tail end and the temperature hysteresis, the material characteristic value can be estimated from the temperature hysteresis at coil positions where the material test is not conducted.

Thus, the information processing device 10 can associate each position in the two-dimensional direction with the material characteristic value based on the temperature hysteresis.

### (Material information prediction method)

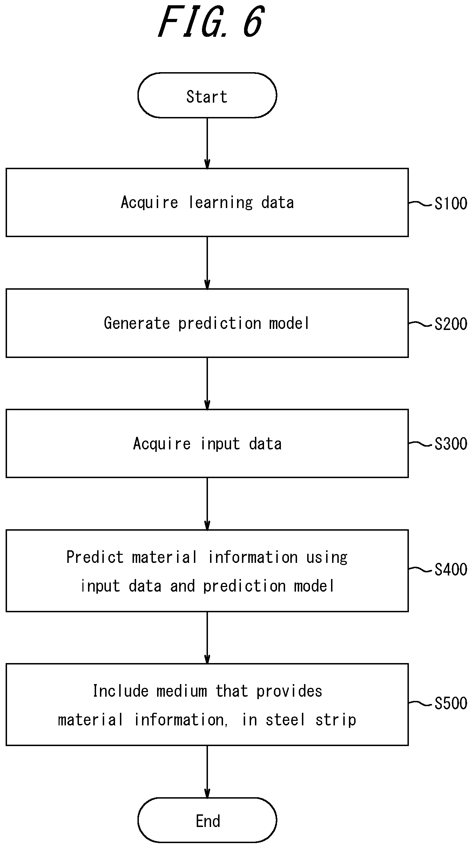

Information processing performed by the information processing device 10 will be described below. FIG. 6 is a flowchart illustrating processes relating to material characteristic value prediction performed in steel strip production. The information processing in FIG. 6 roughly includes a process of generating the prediction model 122 (steps S100 and S200) and a process of predicting material information (steps S300, S400, and S500). In the process of generating the prediction model 122, learning data, that is, input data and material characteristic values for steel strips 9 produced in the past, is used. The process of generating the prediction model 122 is executed separately from the production of the steel strip 9 (i.e. offline). On the other hand, the process of predicting material information is executed during the production of the steel strip 9 (i.e. online), using input data for the steel strip 9 being produced and the generated prediction model 122.

The information processing device 10 acquires the learning data (step S100). The learning data is data associating the input data and the material characteristic values of the steel strips 9 produced in the past, as mentioned above.

The information processing device 10 generates the prediction model 122 (step S200). The prediction model 122 includes the machine learning model generated by machine learning using the learning data and the metallurgical model, as mentioned above.

The information processing device 10 acquires the input data for the steel strip 9 being produced (step S300). Specific examples of the input data are as described above.

The information processing device 10 predicts material information using the input data acquired in step S300 and the prediction model 122 generated in step S200 (step S400). The information processing device 10 predicts, for example, at least one material characteristic value including tensile strength using the prediction model 122, as mentioned above. The information processing device 10 then predicts, for example, the material distribution associating each position of the steel strip 9 to be predicted in the two-dimensional direction of the transverse direction and the rolling direction with the tensile strength.

The information processing device 10 includes a medium that provides the material information predicted in step S400, in the steel strip 9 (step S500). For example, the information processing device 10 converts the medium into electronic information, and adds it to the steel strip 9. The medium may be a one-dimensional code such as a bar code or a two-dimensional code such as a QR code^{®} (QR code is a registered trademark in Japan, other countries, or both). Alternatively, coloring or the like may be used as the medium that provides the material information. In detail, the medium may be a color, depending on which the material of the steel strip 9 is determined. In view of the oil content on the surface of the steel strip 9 and the subsequent storage environment, the code may be added by stamping the steel strip 9. As another example, a medium storing the material information may be attached to the steel strip 9 after packing. The medium storing the material information may be a storage medium such as CD, DVD, or semiconductor memory.

As described above, the material characteristic value prediction system 100 with the foregoing structure can provide the steel strip 9 including the medium that provides the material information including the material distribution. The material information is based on the accurately predicted material characteristic value, as mentioned above. Therefore, the product manufacturer can prevent problems such as cracks and shape defects during forming and produce parts with high efficiency.

While the presently disclosed techniques have been described by way of the drawings and embodiments, various changes and modifications may be easily made by those of ordinary skill in the art based on the present disclosure. Such changes and modifications are therefore included in the scope of the present disclosure. For example, the functions included in the components, steps, etc. may be rearranged without logical inconsistency, and a plurality of components, steps, etc. may be combined into one component, step, etc. and a component, step, etc. may be divided into a plurality of components, steps, etc.

### REFERENCE SIGNS LIST

- 1: converter
- 2: continuous casting machine
- 3: heating furnace
- 4: scale breaker
- 5: rougher
- 6: finisher
- 7: cooling device
- 8: coiler
- 9: steel strip
- 10: information processing device
- 11: heating zone
- 12: soaking zone
- 13: cooling zone
- 14: snout
- 15: galvanizing tank
- 16: wiping device
- 17: alloying zone
- 18: holding zone
- 19: final cooling zone
- 20: mobile communication terminal
- 100: material characteristic value prediction system
- 110: controller
- 111: material characteristic value predictor
- 120: storage
- 121: result database
- 122: prediction model
- 130: communication section
- 140: input section
- 150: output section

## Claims

1. A steel strip comprising a medium that provides material information including a material distribution associating each position in a two-dimensional direction of a rolling direction and a transverse direction with a material characteristic value.

2. The steel strip according to claim 1, wherein the material information is predicted using a prediction model to which input data including a line output factor in a production line for the steel strip, a disturbance factor, and a component value of the steel strip being produced is input, and
the prediction model includes: a machine learning model that receives the input data as input and outputs a production condition factor and that is generated by machine learning; and a metallurgical model that receives the production condition factor as input and outputs the material characteristic value.

3. The steel strip according to claim 2, wherein the metallurgical model is a prediction formula based on a physicochemical phenomenon of metal.

4. The steel strip according to claim 2 or 3, wherein the metallurgical model includes: a first metallurgical model that receives the production condition factor as input and outputs a metallurgical phenomenon factor; and a second metallurgical model that receives the metallurgical phenomenon factor as input and outputs the material characteristic value, and
the metallurgical phenomenon factor includes at least one of volume fraction, surface characteristics, precipitate dimension, precipitate density, precipitate shape, precipitate dispersion state, recrystallization ratio, phase fraction, crystal grain shape, texture, residual stress, dislocation density, and crystal grain size.

5. The steel strip according to any one of claims 1 to 4, wherein the material characteristic value includes at least one of tensile strength, yield stress, elongation, hole expansion ratio, bendability, r value, hardness, fatigue resistance, impact value, delayed fracture value, wear value, chemical convertibility, high-temperature property, low-temperature toughness, corrosion resistance, magnetic property, and surface characteristics.

6. A method of producing a steel strip, the method comprising:
predicting material information including a material distribution associating each position in a two-dimensional direction of a rolling direction and a transverse direction with a material characteristic value, using a prediction model to which input data including a line output factor in a production line for the steel strip, a disturbance factor, and a component value of the steel strip being produced is input; and
including a medium that provides the material information, in the steel strip,
wherein the prediction model includes: a machine learning model that receives the input data as input and outputs a production condition factor and that is generated by machine learning; and a metallurgical model that receives the production condition factor as input and outputs the material characteristic value.
